# EUROPEAN PATENT SPECIFICATION

(11) **EP 4 134 310 B1**
(45) Date of publication and mention of the grant of the patent: **16.04.2025**
(21) Application number: 21275110.1
(22) Date of filing: 11.08.2021
(51) Int. Cl.: B64D 11/06, B64D 11/00, A47B 83/02, B64D 11/04

(54) **MODULAR BAR**
MODULARE BAR
BAR MODULAIRE

(43) Date of publication of application: 15.02.2023
(73) Proprietor: B/E Aerospace (UK) Limited, Leighton Buzzard, Bedfordshire LU7 4TB (GB)
(72) Inventor: BURD, Peter John Leslie, Carmarthenshire South Wales, SA 160RB (GB)
(74) Representative: Dehns

(56) References cited:
- US-A1- 2007 046 078
- US-A1- 2019 337 623

## Description

### TECHNICAL FIELD

The present disclosure relates to a modular bar unit for socialising or event locations or in e.g. aircraft.

### BACKGROUND

Often there is a need to create a bar area for people to together in locations where no such bar area currently exists, for example at locations where events are organised, for gatherings at locations otherwise used for other purposes etc. In response to increasing competition for passengers and increasing passenger demands, some airlines have also started providing areas in their aircraft where people can gather to socialise or relax or sit in a bar environment away from their passenger seat, particularly on long haul flights. Such bars may be serviced or self-service and add to general passenger comfort and satisfaction. Usually, these areas on aircraft require a dedicated area of the cabin where passengers are able to stand and drink/socialise. A service counter assembly is disclosed in US 2019/337623 A1. US 2007/046078 A1 discloses a barstool comprising a seating unit and an extension or insertion unit or both, wherein the seating unit is coupled with the extension or insertion unit or both such that the extension or insertion unit or both may be used to stow and extend the seating unit relative to a wall portion of a bar counter by inserting or pivoting the extension or insertion unit or both.

To install a bar at a location can be time consuming and expensive and requires a dedicated space for the bar. A bar will often have to be custom designed and built for the location in question which is cost intensive. Alternatively, a generic bar can be installed, where space permits. The bar then takes up space in a location which might, at other times, been needed for other uses.

There is a need for a more flexible bar structure that can be configured to the available space and requirements and taste for the occasion and location in question.

### SUMMARY

According to the disclosure, there is provided a modular bar as defined in claim 1.

Also provided is a method of assembling a modular bar as defined in claim 12.

### BRIEF DESCRIPTION

Examples of the bar module and the modular bar according to the disclosure will now be described. The detailed description is by way of example only and variations may be possible within the scope of the claims.
Figures 1A, 1B, 1C and 1D show a module according to the invention in different positions.
Figure 2 shows an embodiment of a modular bar according to the invention.
Figures 3 to 6 show examples of some possible configurations of a modular bar according to the invention.
Figure 7 shows further embodiments of the invention and some examples of modular bars that do not fall within the scope of the claims.

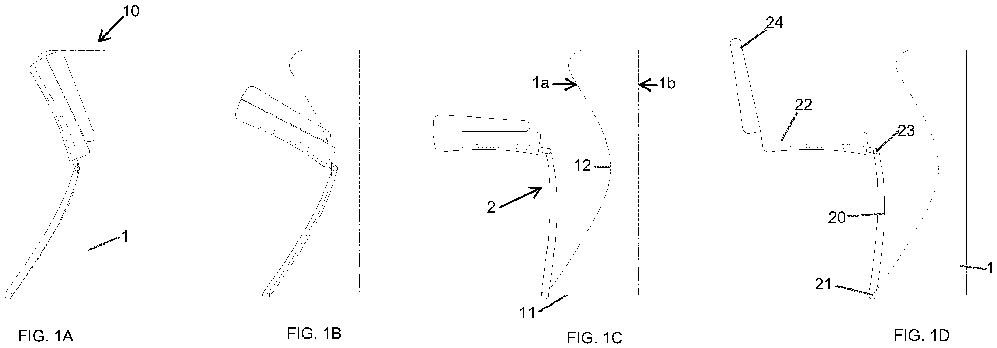

The bar module 10 according to this invention comprises a bar element 1 and one or more seating elements 2. The seating element 2 is foldable and pivotably attached to the bar element 1 to be pivotable and foldable between a stowed position (Fig. 1A) relative to the bar element and a seated position (Fig. 1D) as will be explained further below.

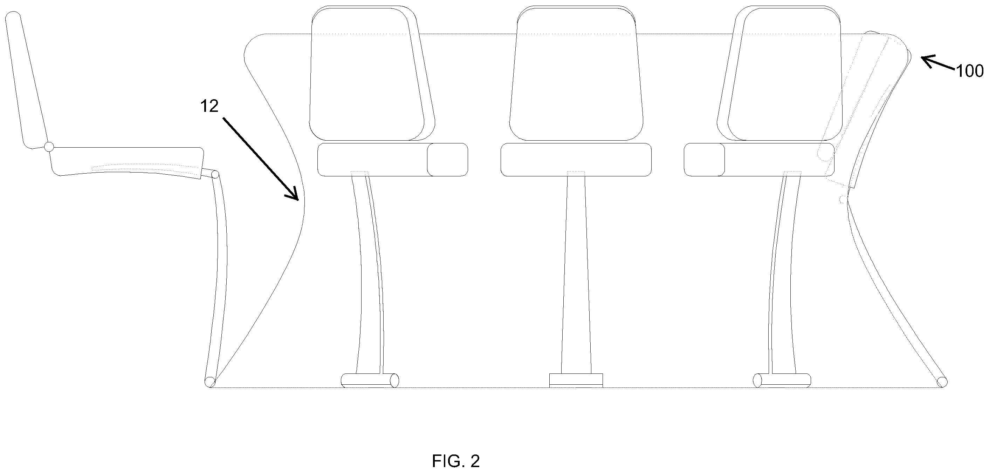

The bar module 10, here comprising a bar element 1 and one seating element 2 but may include several seat elements attached to one bar element. Several such modules can be assembled together to form a modular bar as will be described further below with reference to Figs. 2 to 7, where the circular and semi-circular bars are according to the invention.

In the example shown, the seating element 2 is a cantilevered structure comprising a frame part 20 attached by a first hinge 21 to the bar element 1. Other seat structures may also be envisaged. In the depicted example, the frame part is attached to a base end 11 of the bar element 1 but other attachment locations could also be envisaged. At the end of the frame part 20 opposite the end that is attached to the bar element is a seat part 22 attached to the frame part by a second hinge 23. Optionally, the seating element 2 may also include a back rest part 24 pivotally attached to the seat part 22. In the stowed position, the frame part 20 is pivoted about the first hinge 21 inwards towards an outer side 1a of the bar element 1 and the seat part 22 is either folded back against the frame part (not shown) or positioned, by means of the second hinge 23, to lie flat against the outer side 1a of the bar element 1 as shown in Fig. 1A. Where a seat back part 24 is provided, this is folded to rest on the seat part. The seat element is opened out, as required, for use as a seat as shown in Fig. 1D. In the example shown, to open the seat element out, the seat part may be pivoted about the second hinge 23 relative to the frame part 20 (Fig. 1B), the frame part 20 is then pivoted away from the bar element about the first hinge 21 (Fig. 1C) and the seat back, where provided, is folded out into an upright position (Fig. 1D). The unfolding steps could be performed in a different order. The second hinge 23 may be configured to also permit rotation of the seat part 22 such that the seat can swivel relative to the bar allowing people on adjacent seats to face each other.

Although the sides 1a, 1b of the bar element 1 may be straight, or curved or any other desired shape or surface design, in one example, the outer side 1a is provided with a concave or recessed shape 12 to provide space for a person's knees when seated on the seating element.

The individual modules can then be fitted together and combined and assembled into a modular bar according to the desired shape, size and design by placing modules side-by-side. The modules may be provided with connecting means (not shown) to allow them to be easily secured together or, alternatively, they can be merely positioned side-by-side with their side edges abutting.

Figure 2 shows an example of a modular bar 100 in which several modules 10 as described above have been positioned together resulting in a 'capstan' shaped bar due to the concave knee recess 12.

The modular nature of the bar means that the modules can be assembled in a wide range of shapes and sizes to form automated/self-service or serviced/attended bars.

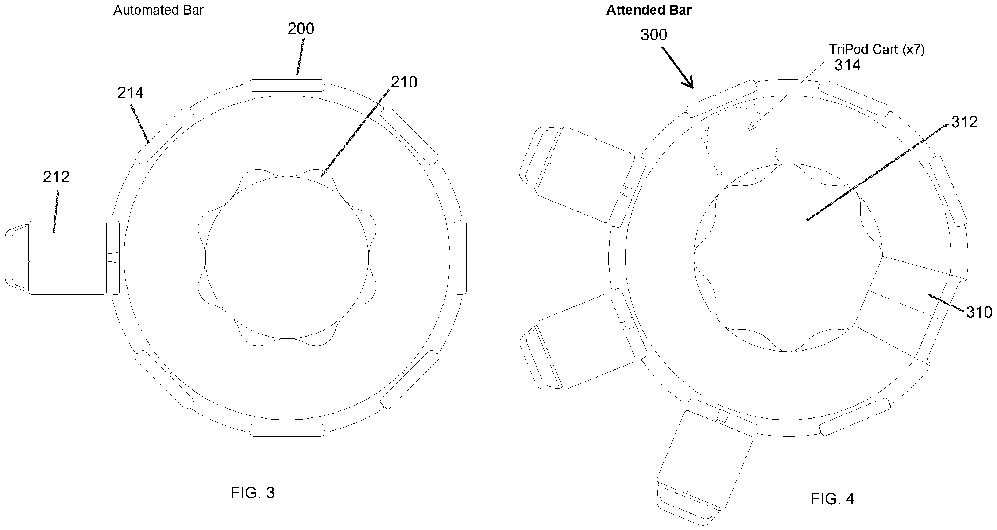

Fig. 3 shows one embodiment of a circular bar 200. In the embodiment, eight modules 10 have been combined in a circular arrangement in the middle of which may be provided a self-service counter 210. In the embodiment shown, one seating element 212 is shown opened out into the seating position whilst the others 214 are in the stowed position. Of course, fewer or more modules can be combined into a circular arrangement.

Figure 4 shows a circular arrangement for an attended bar 300. This is similar to the self-service bar of Fig. 3 but has an entrance 310 defined by leaving a space between two modules for bar staff to access a central service area 312 defined by the inner sides 1b of the modules. The bar elements of the modules may also be shaped to define a recess to accommodate a service cart or storage cart 314.

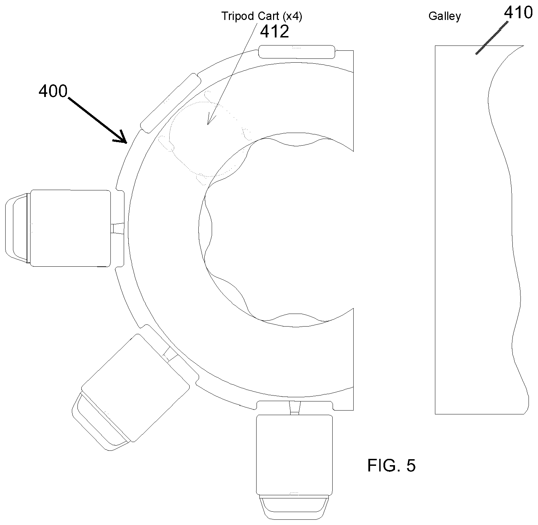

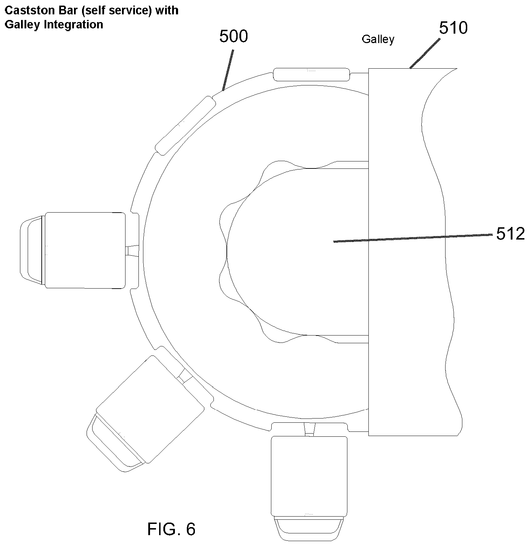

Figures 5 and 6 show an alternative design where the bar 400, 500 is semi-circular and can be located near a wall or, for an aircraft, a galley 410, 510. If the bar is manned, it can be spaced from the wall or galley 410 to provide access for staff to work behind the bar and carts 412 can be stowed under the bar. If the bar is a self-service bar 500, it can be located against the wall or galley 510. The inner sides 1b of the combined bar elements 1 and the galley 510 define a service area 512.

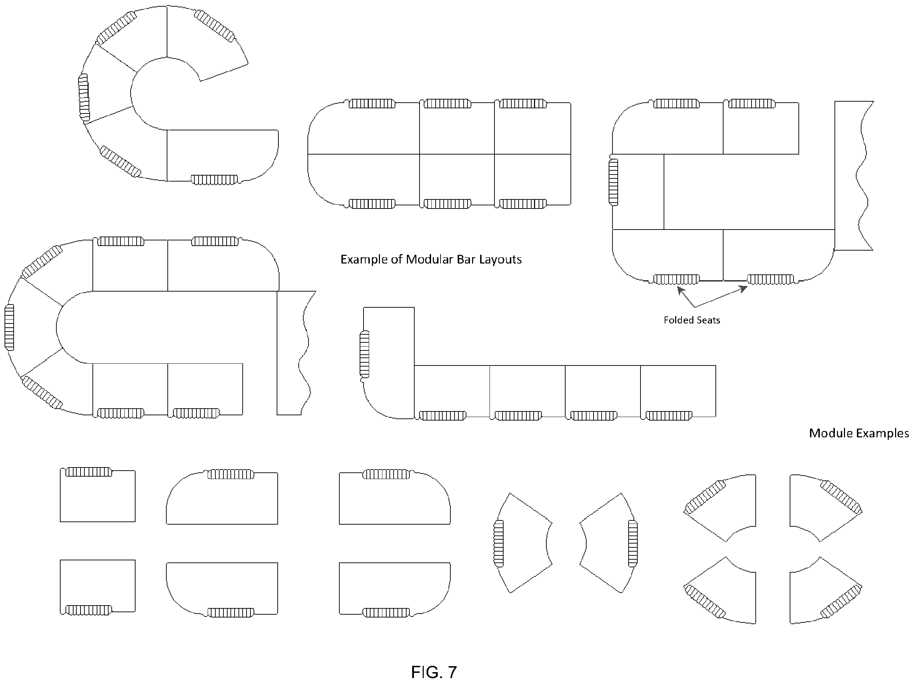

Many other shapes, configurations and sizes are possible such as those shown in Fig. 7. A number of different sized and shaped modules can be combined to form desired layouts, e.g. having a square cross-section, rectangular, polygonal, rounded.

Bar elements may also be provided with power and water connections (not shown).

Because the modules can be easily disassembled and transported and the seat elements stowed, the bar could be assembled only when needed and then folded away for storage when not needed and the layout and size of the bar can be easily adapted to different requirements and situations. In aircraft, for example, smaller or larger bars could be set up depending on the nature of the flight and service offered for each flight.

In terms of manufacturing, costs and time are reduced in that a number of standard modules can be manufactured allowing the customer to provide lighting and décor according to taste, branding etc. Different airlines, for example, could be provided with the basic modules and then provide their own branding.

## Claims

1. A modular self-service or attended bar comprising two or more bar modules, each bar module comprising a bar element (1) and one or more seating elements (2) pivotably attached to the bar element, the seating element(s) (2) moveable relative to the bar element between a stowed position and a seat position, the bar modules arranged side-by-side to form a circular or semi-circular bar.

2. The bar of claim 1, wherein the bar element has an inner side (1b) and an outer side (1a) and a first hinge (21), wherein the seating element (2) is pivotably attached to the outer side (1b) by means of the first hinge (21).

3. The bar of claim 2, wherein the seating element comprises a frame part (20) pivotably attached to the bar element (1), and a second hinge (23), and a seat part (22) pivotably attached to the frame part by the second hinge (23).

4. The bar of claim 3, the seating element further comprising a back rest part (24) foldably attached to the seat part (22).

5. The bar of claim 2 or any claim dependent thereon, wherein the outer side (1a) of the bar element forms a recessed area (12) for providing space for a person's knees when seated at the seating element.

6. The bar of claim 5, wherein the recesses area is defined by a concave curve of the outer side (1a).

7. The bar of claim 2 or any claim dependent thereon, wherein the inner side (1b) of the bar element is provided with a storage recess.

8. The bar of any preceding claim, wherein the bar element is provided with attachment means for attachment to an adjacent module, in use.

9. The bar of any preceding claim, wherein the bar element is provided with water and/or power connections.

10. The bar of any preceding claim, wherein the inner sides (1b) of the modules define an area in which service staff can be located, in use.

11. The bar of claim 10, wherein two adjacent modules are spaced apart to provide access to the area.

12. A method of assembling a self-service or attended bar as claimed in any preceding claim, comprising combining a plurality of the bar modules into a circular or semi-circular modular bar layout.

## Patentansprüche

1. Modulare Bar mit Selbstbedienung oder Bedienung, umfassend zwei oder mehr Barmodule, wobei jedes Barmodul ein Barelement (1) und ein oder mehrere Sitzelemente (2) umfasst, die schwenkbar an dem Barelement befestigt sind, wobei das/die Sitzelement(e) (2) relativ zu dem Barelement zwischen einer verstauten Position und einer Sitzposition bewegbar ist/sind, wobei die Barmodule nebeneinander angeordnet sind, um eine runde oder halbrunde Bar zu bilden.

2. Bar nach Anspruch 1, wobei das Barelement eine Innenseite (1b) und eine Außenseite (1a) sowie ein erstes Scharnier (21) aufweist, wobei das Sitzelement (2) durch das erste Scharnier (21) schwenkbar an der Außenseite (1b) befestigt ist.

3. Bar nach Anspruch 2, wobei das Sitzelement ein Rahmenteil (20), das schwenkbar an dem Barelement (1) befestigt ist, und ein zweites Scharnier (23) und ein Sitzteil (22) umfasst, das durch das zweite Scharnier (23) schwenkbar an dem Rahmenteil befestigt ist.

4. Bar nach Anspruch 3, wobei das Sitzelement ferner ein Rückenlehnenteil (24) umfasst, das zusammenklappbar an dem Sitzteil (22) befestigt ist.

5. Bar nach Anspruch 2 oder einem davon abhängigen Anspruch, wobei die Außenseite (1a) des Barelements einen vertieften Bereich (12) bildet, um Platz für die Knie einer Person zu schaffen, wenn diese auf dem Sitzelement sitzt.

6. Bar nach Anspruch 5, wobei der vertiefte Bereich durch eine konkave Krümmung der Außenseite (1a) definiert ist.

7. Bar nach Anspruch 2 oder einem davon abhängigen Anspruch, wobei die Innenseite (1b) des Barelements mit einer Aufbewahrungsvertiefung ausgestattet ist.

8. Bar nach einem der vorhergehenden Ansprüche, wobei das Barelement mit Befestigungsmitteln zur Befestigung an einem benachbarten Modul im Gebrauch ausgestattet ist.

9. Bar nach einem der vorhergehenden Ansprüche, wobei das Barelement mit Wasser- und/oder Stromanschlüssen ausgestattet ist.

10. Bar nach einem der vorhergehenden Ansprüche, wobei die Innenseiten (1b) der Module einen Bereich definieren, in dem sich bei Gebrauch Bedienungspersonal aufhalten kann.

11. Bar nach Anspruch 10, wobei zwei benachbarte Module voneinander beabstandet sind, um Zugang zu dem Bereich bereitzustellen.

12. Verfahren zum Montieren einer Bar mit Selbstbedienung oder Bedienung nach einem der vorhergehenden Ansprüche, umfassend Kombinieren einer Vielzahl von Barmodulen zu einer runden oder halbrunden modularen Baranordnung.

## Revendications

1. Bar modulaire en libre-service ou avec service comprenant deux modules de bar ou plus, chaque module de bar comprenant un élément de bar (1) et un ou plusieurs éléments d'assise (2) fixés de manière pivotante à l'élément de bar, le ou les éléments d'assise (2) étant mobiles par rapport à l'élément de bar entre une position rangée et une position d'assise, les modules de bar étant agencés côte à côte pour former un bar circulaire ou semi-circulaire.

2. Bar selon la revendication 1, dans lequel l'élément de bar présente un côté interne (1b) et un côté externe (1a) et une première charnière (21), dans lequel l'élément d'assise (2) est fixé de manière pivotante au côté externe (1b) au moyen de la première charnière (21).

3. Bar selon la revendication 2, dans lequel l'élément d'assise comprend une partie de cadre (20) fixée de manière pivotante à l'élément de bar (1), et une seconde charnière (23), et une partie siège (22) fixée de manière pivotante à la partie de cadre par la seconde charnière (23).

4. Bar selon la revendication 3, l'élément d'assise comprenant également une partie dossier (24) fixée de manière pliable à la partie siège (22).

5. Bar selon la revendication 2 ou une quelconque revendication dépendant de celle-ci, dans lequel le côté externe (1a) de l'élément de bar forme une zone évidée (12) pour fournir de l'espace pour les genoux d'une personne lorsqu'elle est assise sur l'élément d'assise.

6. Bar selon la revendication 5, dans lequel la zone évidée est définie par une courbe concave du côté externe (1a).

7. Bar selon la revendication 2 ou une quelconque revendication dépendant de celle-ci, dans lequel le côté interne (1b) de l'élément de bar est pourvu d'un évidement de stockage.

8. Bar selon une quelconque revendication précédente, dans lequel l'élément de bar est pourvu de moyens de fixation pour la fixation à un module adjacent, lors de l'utilisation.

9. Bar selon une quelconque revendication précédente, dans lequel l'élément de bar est pourvu de raccordements d'eau et/ou d'électricité.

10. Bar selon une quelconque revendication précédente, dans lequel les côtés internes (1b) des modules définissent une zone dans laquelle le personnel de service peut être situé, en cours d'utilisation.

11. Bar selon la revendication 10, dans lequel deux modules adjacents sont espacés pour permettre l'accès à la zone.

12. Procédé d'assemblage d'un bar en libre-service ou avec service selon une quelconque revendication précédente, comprenant la combinaison d'une pluralité de modules de bar dans une disposition de bar modulaire circulaire ou semi-circulaire.
